(19) **Europäisches Patentamt**
**European Patent Office**
**Office européen des brevets**

(11) **EP 2 423 716 B1**

(12) **EUROPEAN PATENT SPECIFICATION**

(45) Date of publication and mention
of the grant of the patent:
**14.08.2013 Bulletin 2013/33**

(51) Int Cl.:
*G02B 5/30* (2006.01)   *G02F 1/1335* (2006.01)

(21) Application number: **10766969.9**

(86) International application number:
**PCT/JP2010/056442**

(22) Date of filing: **09.04.2010**

(87) International publication number:
**WO 2010/122911 (28.10.2010 Gazette 2010/43)**

(54) **POLARIZING THIN FILM, POLARIZING PLATE AND LIQUID CRYSTAL DISPLAY DEVICE**

POLARISATIONSDÜNNSCHICHT, POLARISATIONSPLATTE UND FLÜSSIGKRISTALLANZEIGE

FILM MINCE POLARISANT, PLAQUE POLARISANTE ET DISPOSITIF D'AFFICHAGE À CRISTAUX LIQUIDES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **21.04.2009   JP 2009103023**
**05.04.2010   JP 2010086642**

(43) Date of publication of application:
**29.02.2012 Bulletin 2012/09**

(73) Proprietor: **Nitto Denko Corporation**
**Ibaraki-shi**
**Osaka 567-8680 (JP)**

(72) Inventors:
• **MIYATAKE, Minoru**
**Ibaraki-shi**
**Osaka 567-8680 (JP)**

• **KAMIJO, Takashi**
**Ibaraki-shi**
**Osaka 567-8680 (JP)**
• **SAWADA, Hiroaki**
**Ibaraki-shi**
**Osaka 567-8680 (JP)**

(74) Representative: **Grünecker, Kinkeldey,**
**Stockmair & Schwanhäusser**
**Leopoldstrasse 4**
**80802 München (DE)**

(56) References cited:
JP-A- 6 347 641        JP-A- 8 146 416
JP-A- 2000 338 329     JP-A- 2001 343 521
JP-A- 2001 343 522     JP-A- 2009 031 474
US-A1- 2003 178 608

**Description**

TECHNICAL FIELD OF THE INVENTION

The present invention relates to a polarizing film which comprises a polyvinyl alcohol-based resin layer including dichroic materials, a polarizing plate having the polarizing film, and a liquid crystal display device including the polarizing film or the polarizing plate.

BACKGROUND ART

Conventionally, polarizing films comprise polyvinyl alcohol-based resin layers respectively including dichroic materials are known (For instance, Japanese Unexamined Patent Application Publication No. 2001-343521).

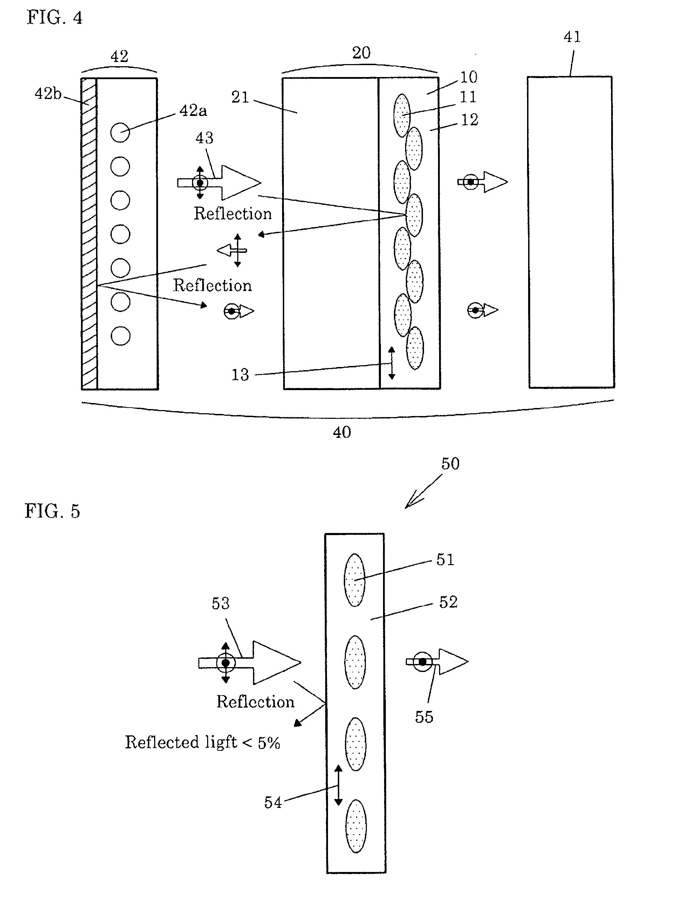

FIG. 5 is a diagram showing one example of a conventional polarizing film 50. In the conventional polarizing film 50, the case where natural light 53 is incident on the polarizing film 50 that comprises a polyvinyl alcohol-based resin layer 52 including dichroic materials 51 is considered. It is possible to decompose natural light 53 into a component of an absorption axis direction 54 and a component of a transmission axis direction (not shown in figure) in the polarizing film 50. As for the polarizing film 50, vibrating surfaces of light absorb light in the absorption axis direction 54 and then the vibrating surfaces of light allow light 55 in the transmission axis direction to transmit. While light whose vibrating surfaces are in the absorption axis direction 54 is generally referred to as extraordinary light, light 55 whose vibrating surfaces are in the transmission axis direction is generally referred to as ordinary light. The absorption axis direction 54 is perpendicular to the transmission axis direction. Since light energy then absorbed is converted into thermal energy, at least 57% of the incident natural light 53 is lost.

SUMMARY OF THE INVENTION

The conventional polarizing film 50 absorbs extraordinary light to convert it into thermal energy and thus at least 57% of the incident natural light 53 is lost. It is an object of the present invention to provide a polarizing film having functions of partially reflecting extraordinary light. According to the present invention, it is possible to reduce a loss of light in the polarizing film.

MEANS FOR SOLVING THE PROBLEMS

The summary of the present invention is as follows:
In a first preferred aspect, a polarizing film according to the present invention comprises a polyvinyl alcohol-based resin layer including dichroic materials. The polarizing film according to the present invention has:

  (a) a film thickness of 0.5 $\mu$m to 5 $\mu$m, and
  (b) an absorbance of 1.5 to 7.0 for extraordinary light per film thickness of 1 $\mu$m relative to monochromatic light having a wavelength of 550 nm.

In a second preferred aspect of the polarizing film according to the present invention, the dichroic materials are iodine. In a third preferred aspect of the polarizing film according to the present invention, the polyvinyl alcohol-based resin layer consists of polyvinyl alcohol or an ethylene vinyl alcohol copolymer.
In a fourth preferred aspect, a polarizing plate according to the present invention comprises: a polarizing film according to any one of the aforementioned polarizing films; and a transparent substrate to support the polarizing film from one side. And the transparent substrate in an absorption axis direction of the polarizing film has a refractive index of less than 1.54.
In a fifth preferred aspect, a liquid crystal display device according to the present invention includes a liquid crystal cell and a back light, wherein the polarizing film is interposed between the liquid crystal cell and the back light.
In a sixth preferred aspect, the liquid crystal display device according to the present invention includes a liquid crystal cell and a back light, wherein the polarizing plate is interposed between the liquid crystal cell and the back light.

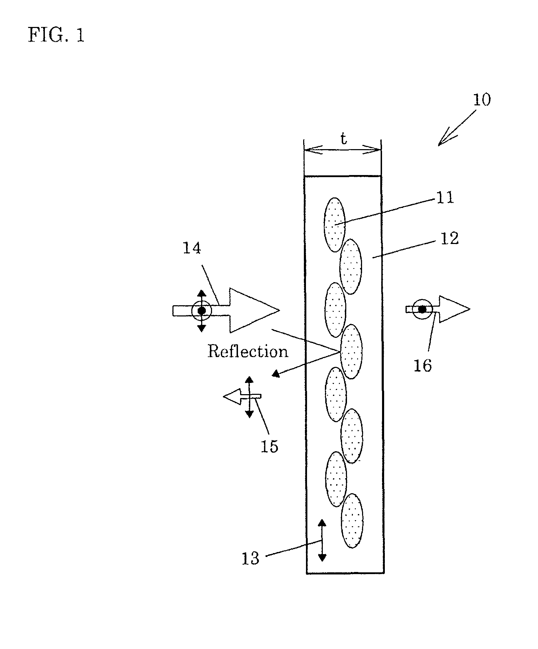

FIG. 1 schematically shows a polarizing film 10 of the present invention. The inventors of the present invention have found out as below. The polarizing film 10 including dichroic materials 11 respectively having a high concentration and comprising a polyvinyl alcohol-based resin layer 12 partially reflects extraordinary light. Extraordinary light is light 15 whose vibrating surfaces are located in an absorption axis direction 13. High concentration means a concentration having an absorbance (absorbance per unit) of 1.5 or greater for extraordinary light per film thickness of 1 $\mu$m relative to monochromatic light having a wavelength of 550 nm. When natural light 14 enters the polarizing film 10 of the present invention, the polarizing film 10 partially reflects extraordinary light to allow ordinary light to transmit. Ordinary light is light 16 whose vibrating surfaces are located in a transmission axis direction.

Reflectivity $R_e$ of extraordinary light in the polarizing film 10 is represented as follows when $n_1$ is a refractive index of a material in contact with a surface of a polarizing film, $n_e$ is a refractive index of extraordinary light of a polarizing film, and k is an extinction coefficient:

$$R_e = [(n_1-n_e)^2+k^2] / [(n_1+n_e)^2+k^2] \dots (1)$$

In the equation (1), when the concentration of each of the dichroic materials 11 and the film thickness t of the polarizing film 10 is in a certain range, a square value of the extinction coefficient is greater. To meet the requirements, in the polarizing film 10 of the present invention, the reflectivity $R_e$ of extraordinary light is considered to be large.

On the other hand, the conventional polarizing film 50 (FIG. 5) only shows ordinary interface reflection because the concentration of each of the dichroic materials and the film thickness of the polarizing film 50 do not meet the conditions defined in the present invention. In the conventional polarizing film 50, the square value ($k^2$) of the extinction coefficient is small, so that $R_e$ is a substantially constant value in the range of less than 5%. As a result, it is not possible for the polarizing film 50 to obtain advantages of the present invention.

EFFECTS OF THE INVENTION

The polarizing film 10 of the present invention partially reflects extraordinary light. Extraordinary light typically has a reflectivity of 5% or higher relative to incident light. This reflected light may be recycled by being reflected again with other reflecting material because this reflected light remains as light energy.

It is possible to improve brightness of a liquid crystal display device without the use of a high-priced existing brightness enhancement film by interposing the polarizing film 10 or a polarizing plate 20 of the present invention between a liquid crystal cell and a back light.

BRIEF DESCRIPTION OF THE DRAWINGS

FIG. 1 is a schematic view of a polarizing film of the present invention;
FIG. 2 is a schematic view of a polarizing plate of the present invention;
FIG. 3 is a schematic view of a liquid crystal display device of the present invention;
FIG. 4 is a schematic view of a liquid crystal display device of the present invention; and
FIG. 5 is a schematic view of a conventional polarizing film.

DESCRIPTION OF THE PREFERRED EMBODIMENTS

[Polarizing film]

FIG. 1 shows one example of a polarizing film 10 of the present invention. The polarizing film 10 of the present invention comprises a polyvinyl alcohol-based resin layer 12 including dichroic materials 11. The polarizing film 10 of the present invention exhibits absorption anisotropy and reflection anisotropy at any wavelengths in a visible light region (wavelength of 380 nm to 780 nm).

In the case where the polarizing film 10 of the present invention comprises the polyvinyl alcohol-based resin layer 12 including the dichroic materials 11, the polarizing film 10 may further include an appropriate additive. Typical examples of such an additive include a surfactant and an antioxidant.

The polarizing film 10 of the present invention is characterized by a thin film thickness t thereof and a high concentration of the dichroic materials 11. The polarizing film 10 has a film thickness of 0.5 $\mu$m to 5 $\mu$m and preferably has a film thickness of 0.5 $\mu$m to 3 $\mu$m. When the thickness t of the polarizing film 10 is over 5 $\mu$m, the reflectivity of extraordinary light is lower. On the other hand, when the film thickness t of the polarizing film 10 is smaller than 0.5 $\mu$m, it becomes difficult to stretch the polyvinyl alcohol-based resin layer 12, resulting in insufficient orientation of the dichroic materials 11.

The polarizing film 10 of the present invention preferably has an absorbance per unit of 1.5 to 7.0 relative to monochromatic light having a wavelength of 550 nm, more preferably 1.8 to 7.0. Absorbance per unit is an absorbance of extraordinary light per film thickness t = 1 $\mu$m. In the polarizing film 10 of the present invention, the absorbance per unit is in the aforementioned range under the conditions that the film thickness t is 0.5 $\mu$m to 5 $\mu$m. Accordingly, the

polarizing film 10 of the present invention partially reflects extraordinary light when natural light 14 enters to allow ordinary light to transmit the polarizing film 10.

[Dichroic material]

Typically, the dichroic materials 11 to be used in the present invention are respectively iodine, an organic dye, and a mixture thereof. Iodine is preferable as dichroic materials 11.

[Polyvinyl alcohol-based resin layer]

The polyvinyl alcohol-based resin layer 12 to be used in the present invention is formed by forming a polyvinyl alcohol-based resin in the form of a layer.

A polyvinyl alcohol-based resin is typically obtained by saponifying a polyvinyl acetate-based resin. The polyvinyl alcohol-based resin to be used in the present invention has a saponification degree of 85 mole % to 100 mole % and has a polymerization degree of 1,000 to 10,000. Typical examples of the polyvinyl alcohol-based resin include polyvinyl alcohol or an ethylene vinyl alcohol copolymer.

[Method for producing polarizing film]

It is possible to obtain the polarizing film 10 of the present invention by immersing the stretched polyvinyl alcohol-based resin layer 12 in a stain solution containing the dichroic materials 11 to be dyed. Alternatively, it is possible to obtain the polarizing film 10 of the present invention by immersing the polyvinyl alcohol-based resin layer 12 in a stain solution containing the dichroic materials 11 to be dyed and then stretching the dyed polyvinyl alcohol-based resin layer 12.

Any stretching processing methods, such as roll stretching and tenter stretching or the like are used as a method for stretching the polyvinyl alcohol-based resin layer 12. The stretching ratio of the polyvinyl alcohol-based resin layer 12 is three times to seven times relative to the original length thereof. The stretching temperature of the polyvinyl alcohol-based resin layer 12 is generally 30°C to 160°C. The layer thickness of the polyvinyl alcohol-based resin layer 12 before stretching is set so that the layer thickness t after stretching may be 0.5 $\mu$m to 5 $\mu$m.

The concentration of a water solution containing the dichroic materials 11 for dyeing the polyvinyl alcohol-based resin layer 12 is preferably over 1 weight part of the dichroic materials 11 and 5 weight parts or smaller relative to 100 weight parts of water.

When the dichroic materials 11 are iodine, it is possible to adjust the absorbance per unit of the polarizing film 10 by the addition of boric acid, urea, and potassium iodine or the like. For instance, when the added quantity of potassium iodine in the stain solution is increased, the absorbance per unit is greater. On the other hand, when the added quantity of boric acid in the stain solution is increased, the absorbance per unit is smaller.

The temperature and the immersion time of the stain solution are determined in accordance with the concentration of the stain solution and the layer thickness of the polyvinyl alcohol-based resin layer so that characteristics defined in the present invention may be satisfied. The temperature of the stain solution is preferably 10°C to 40°C and the immersion time is preferably 20 seconds to 300 seconds. It is possible to set the absorbance per unit of the polarizing film at 1.5 to 7.0 under such conditions.

To provide water resistance, it is preferable to immerse the stretched and dyed polyvinyl alcohol-based resin layer in a boric-acid water solution to be boric-acid treated. The boric-acid treated polarizing film is generally washed in water and is dried.

[Polarizing plate]

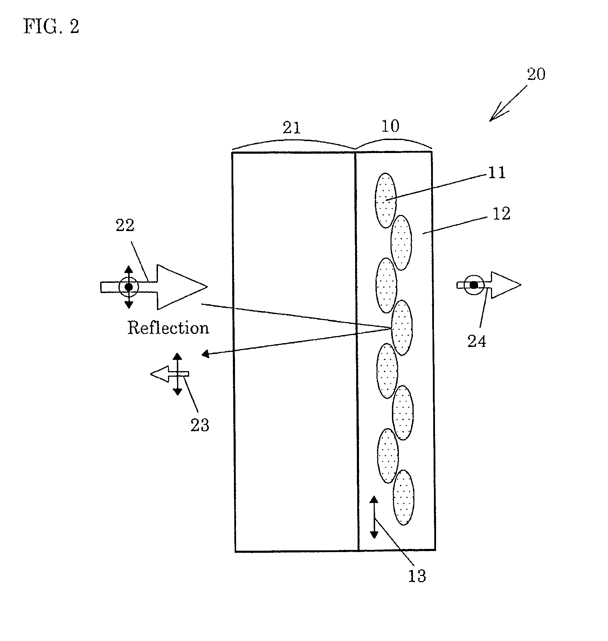

As shown in FIG. 2, a polarizing plate 20 comprises: a polarizing film 10; and a transparent substrate 21 to support the polarizing film 10 from one side. The transparent substrate 21 has a refractive index of less than 1.54 when measured in the absorption axis direction 13 of the polarizing film 10.

When natural light 22 enters the polarizing plate 20 of the present invention, the polarizing plate 20 partially reflects extraordinary light to allow ordinary light to transmit.

To increase the reflectivity $R_e$ of extraordinary light in the polarizing film 10, it is preferable that there is a big difference between the refractive index of the transparent substrate 21 and the refractive index of extraordinary light in the polarizing film 10. The polarizing film 10 has a refractive index (refractive index of the absorption axis direction 13) of about 1.54 for extraordinary light. Accordingly, the transparent substrate 21 preferably has a refractive index of 1.53 or lower when measured in the absorption axis direction 13 of the polarizing film 10.

The transparent substrate 21 is not particularly limited as long as the aforementioned conditions of the refractive index are met, however, is preferably a transparent polymer film.

In the polarizing plate 20, the polarizing film 10 may be directly formed on the transparent substrate 21, alternatively, the polarizing film 10 may be laminated on the transparent substrate 21 via an adhesion layer.

In the case where an adhesion layer is placed between the polarizing film 10 and the transparent substrate 21, the adhesion layer preferably has a refractive index of 1.53 or lower, either, when measured in the absorption axis direction 13 of the polarizing film 10.

The polarizing plate 20 preferably has a transmittance of 25% to 44%, more preferably 35% to 42%.

The polarizing plate 20 preferably has a polarization degree of 99% or higher.

According to the present invention, it is possible for the polarizing plate 20 to have a reflectivity $R_e$ of 5% or higher for extraordinary light, preferably 5% to 15%.

Further, according to the present invention, it is possible for the polarizing plate 20 to have an increase rate of brightness of 1.4% or higher, preferably 1.4% to 3.0%.

[Liquid crystal display device]

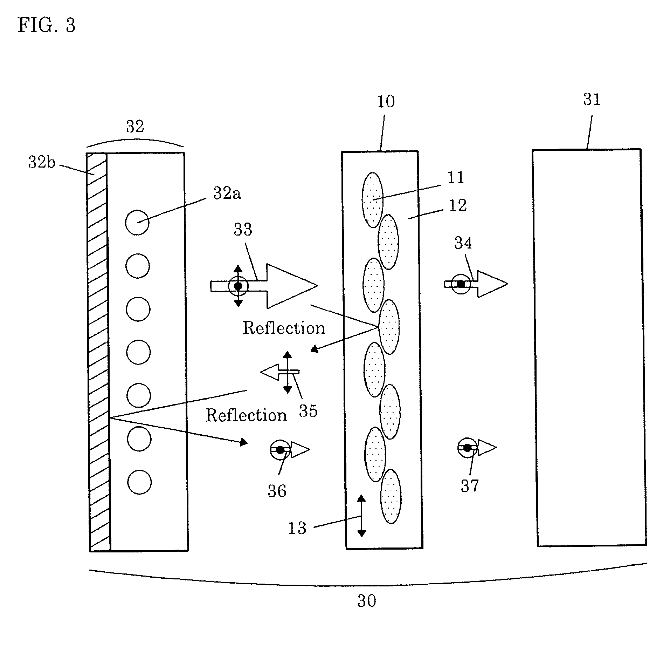

As shown in FIG. 3, a liquid crystal display device 30 of the present invention comprises: a liquid crystal cell 31; a back light 32; and the polarizing film 10 of the present invention interposed between the liquid crystal cell 31 and the back light 32.

Alternatively, as shown in FIG. 4, a liquid crystal display device 40 of the present invention comprises: a liquid crystal cell 41; a back light 42; and the polarizing plate 20 of the present invention interposed between the liquid crystal cell 41 and the back light 42.

Out of incident light 33 emitted from light sources 32a of the back light 32, ordinary light transmits the polarizing film 10 to be used for the liquid crystal display device 30 of the present invention and extraordinary light is partially reflected by the polarizing film 10.

Light 35 reflected by the polarizing film 10 is reflected again by a back reflective film 32b of the back light 32 to be light 36 with vibrating surfaces rotating by 90°.
The light 36 passes through the polarizing film 10 to be light 37, resulting in entering the liquid crystal cell 31.

As a result, compared to the case of using a conventional polarizing film 50, the brightness of the liquid crystal display device 30 is improved because light entering the liquid crystal cell 31 is increased by light 37.

In the liquid crystal display device 40, light entering the liquid crystal cell 41 is increased by the similar mechanism as the liquid crystal display device 30 of the present invention, so that the brightness of the liquid crystal display device 40 is improved.

When the polarizing plate 20 of the present invention is used for the liquid crystal display device 40 of the present invention, as shown in FIG. 4, incident light 43 emitted from the back light 42 enters from the transparent substrate 21 side. Although there is no illustration in figures, on the contrary, the incident light 43 emitted from the back light 42 may enter from a side of the polarizing film 10 by positioning the polarizing film 10 on the back light 42 side.

As shown in FIG. 4, when the incident light 43 enters the transparent substrate 21 side, there is an advantage that no impact is given to display properties of the liquid crystal display device 40, even though the transparent substrate 21 has birefringence.

On the other hand, when the incident light 43 enters from the polarizing film 10 side, it is possible to make the reflectivity $R_e$ of extraordinary light in the polarizing film 10 greater.

In general, the liquid crystal cells 31 and 41 respectively have two substrates and a liquid crystal layer sandwiched between the substrates. Typically, a color filter, an opposite electrode, and an oriented film are formed on one substrate and a liquid crystal driving electrode, a wiring pattern, a thin-film transistor, and an oriented film are formed on the other substrate.

Examples of an operation mode of the liquid crystal cells 31 and 41 include a Twisted Nematic mode and an electrically controlled Birefringence mode. Examples of the electrically controlled Birefringence mode include a Vertical Alignment system, an Optically Compensated Bend (OCB) system, and an IPS (In-Plane Switching) system or the like.

Any systems, such as a direct irradiation system, a side light system, and a surface light source system or the like are used for the back light 32 and 42 to be used in the present invention. Generally, the back light 32 includes the light sources 32a and a back reflective film 32b, and the back light 42 includes light sources 42a and a back reflective film 42b.

EXAMPLES

[Example 1]

(1) A surface of a transparent substrate which comprises a norbornene-based resin film with a thickness of 150 $\mu$m (manufactured by JSR Corporation, product name: ARTON Film) was corona-treated.

(2) A water solution of 7% by weight of polyvinyl alcohol (manufactured by NIPPON SYNTHETIC CHEMICAL INDUSTRY CO., LTD., product name: NH18) is applied onto one side of the norbornene-based resin film to form a laminated film composed of a norbornene-based resin film and a polyvinyl alcohol film.

(3) The laminated film composed of a norbornene-based resin film and a polyvinyl alcohol film is heated by drying at 100°C for 10 minutes to form a polyvinyl alcohol film with a thickness of 5 $\mu$m on one surface of the norbornene-based resin film.

(4) The laminated film was roll-stretched at 150°C in a stretch ratio of 5 times as long as the original length of the laminated film.

(5) The stretched laminated film was immersed in a stain solution (liquid temperature: 20°C) including a water solution containing iodine and potassium iodine for 30 seconds to absorb and orient iodine on a polyvinyl alcohol layer.

(6) The laminated film was immersed in a boric-acid solution (liquid temperature: 55°C) with a concentration of 10% by weight and then was immersed in a potassium iodine water solution with a concentration of 4% by weight for 10 seconds.

(7) The laminated film was dried at 60°C for 4 minutes.

As mentioned above, a polarizing plate was prepared including a polarizing film and a transparent substrate to support the polarizing film form one side. The polarizing film was a polyvinyl alcohol layer and had a transmittance of 41% and a polarization degree of 99.8% or higher. The transparent substrate was a norbornene-based resin film. Table 1 shows characteristics of the polarizing film and the polarizing plate.

The content of iodine contained in the stain solution was 1.1 weight parts relative to 100 weight parts of water. Further, the content of potassium iodine was 10 weight parts relative to 100 weight parts of water.

The stretched norbornene-based resin film had a refractive index of 1.52 measured in an absorption axis direction of the polarizing film.

[Example 2]

A polarizing plate composed of a polarizing film and a transparent substrate to support the polarizing film from one side was prepared in the same manner as in Example 1 except that the polyvinyl alcohol layer before stretching had a thickness of 3 $\mu$m. The polarizing film was a polyvinyl alcohol layer and had a transmittance of 41% and a polarization degree of 99.8% or higher. The transparent substrate was a norbornene-based resin film. Table 1 shows characteristics of the polarizing film and the polarizing plate.

[Comparative Example 1]

A polarizing plate available in the market (manufactured by NITTO DENKO CORPORATION, product name: NPF-SEG1224 with a transmittance of 43% and a polarization degree of 99.8% or higher) was evaluated.

[Comparative Example 2]

A polarizing plate composed of a polarizing film and a transparent substrate to support the polarizing film from one side was prepared in the same manner as in Example 1 except that the immersion time in a stain solution (liquid temperature: 20°C) was changed to 10 seconds. The polarizing film was a polyvinyl alcohol layer and had a transmittance of 41% and a polarization degree of 99.8% or higher. The transparent substrate was a norbornene-based resin film. Table 1 shows characteristics of the polarizing film and the polarizing plate.

[Table 1]

| | Polayrizing film | | Polarizing plate | |
|---|---|---|---|---|
| | Thickness t (*1) ($\mu$m) | Absorbance per unit (*2)(1/$\mu$m) | reflectivity Re of extraordinary light (*3) (%) | Increase rate of brightness (%) |
| Example 1 | 2.5 | 1.8 | 5.2 | 1.4 |
| Example 2 | 1.3 | 4.9 | 11.0 | 2.7 |

(continued)

| | Polayrizing film | | Polarizing plate | |
|---|---|---|---|---|
| | Thickness t (*1) ($\mu$m) | Absorbance per unit (*2)(1/$\mu$m) | reflectivity Re of extraordinary light (*3) (%) | Increase rate of brightness (%) |
| Comparative Example 1 | 25.0 | 1.4 | 4.2 | 0.0 |
| Comparative Example 2 | 2.5 | 1.1 | 4.7 | 0.0 |

(*1) Thickness t = thickness of the polarizing film
(*2) Absorbance per unit = absorbance per thickness of 1 $\mu$m of the polarizing film for extraordinary light relative to monochromatic light having a wavelength of 550 nm
(*3) Reflectivity Re of extraordinary light = reflectivity of the polarizing plate for extraordinary light relative to monochromatic light having a wavelength of 550 nm (reflectivity in an absorption axis direction)

[Evaluation]

As indicated in Table 1, the polarizing plate in Example 1 had a higher increase rate of brightness than the polarizing plates in Comparative Examples 1 and 2. The polarizing plate in Example 2 had a further higher increase rate of brightness.

[Measuring method]

[Film thickness}

The film thickness of a polarizing film or the like was measured using a digital micrometer (manufactured by ANRITSU CORP., product name: KC-351C).

[Absorbance per unit]

Absorbance per unit was measured by a spectrophotometer with an integrated sphere equipped with Glan-Taylor prism polarizer (manufactured by HITACHI, LTD., product name: U-4100). Base line corrections were made using a stretched polyvinyl alcohol layer before dyeing as a reference. Transmittance $K_2$ of extraordinary light in a polarizing film relative to monochromatic light having a wavelength of 550 nm was measured to obtain an absorbance per unit from the following equation:
Absorbance per unit (1/$\mu$m) = -Ln ($K_2$) /film thickness ($\mu$m) The absorbance per unit in Table 1 is a value obtained when entering measured light from a polarizing film side.

[Reflectivity of extraordinary light]

A transparent substrate side of a polarizing plate was polished by a sandpaper to reduce reflection on a back side to an acceptable level and then an acrylic black lacquer was sprayed to be well dried. Measured light entered from the polarizing film side and then the reflectivity of extraordinary light relative to monochromatic light having a wavelength of 550 nm was measured using a spectrophotometer with an integrating sphere (manufactured by HITACHI, LTD., product name: U-4100) equipped with a Glan-Taylor prism polarizer. Further, the reflectivity of a standard white plate ($BaSO_4$) was set at 100%.

[Increase rate of brightness]

A back light was taken out form a 32-inch liquid crystal television unit (manufactured by HITACHI, LTD., product name: Woo) available in the market. And a sample where each polarizing plate in Examples and Comparative Examples is attached to a glass plate was prepared. The sample was placed on a front surface of the back light so that light of the back light was incident from the polarizing film side. Brightness ($B_1$) from a front direction after lighting the back light was measured by a luminance meter (manufactured by TOPCON CORPORATION, product name: BM-5).
An increase rate (%) of brightness was obtained by the following equation, representing brightness as $B_0$ when

using the polarizing plate in the Comparative Example 1:

$$\text{Increase rate of brightness (\%)} = (B_1 - B_0)/B_0 \times 100$$

INDUSTRIAL APPLICABILITY

The liquid crystal display device of the present invention is preferably used for liquid crystal television units, computer displays, car navigation systems, mobile phones, and game devices or the like.

DESCRIPTION OF THE REFERENCE NUMERALS

10: polarizing film; 11: dichroic material; 12: polyvinyl alcohol-based resin layer; 13: absorption axis direction; 14: natural light; 15: reflected light; 16: transmitted light; 20: polarizing plate; 21: transparent substrate; 22: natural light; 23: reflected light; 24: transmitted light; 30: liquid crystal display device; 31: liquid crystal cell; 32: back light; 32a: light source; 32b: back reflective film; 33: natural light; 34: transmitted light; 35: reflected light; 36: reflected light; 37: transmitted light; 40: liquid crystal display device; 41: liquid crystal cell; 42: back light; 42a: light source; 42b: back reflective film; 43: incident light; 50: polarizing film; 51: dichroic material; 52: polyvinyl alcohol-based resin layer; 53: natural light; 54: absorption axis direction; 55: transmitted light

**Claims**

1.  A polarizing film (10) comprising a polyvinyl alcohol-based resin layer (12) including dichroic materials (11), **characterized in that** the polarizing film (10) has:

    (a) a film thickness of 0.5 $\mu$m to 5 $\mu$m, and
    (b) an absorbance of 1.5 to 7.0 for extraordinary light per film thickness of 1 $\mu$m relative to monochromatic light having a wavelength of 550 nm

    wherein the absorbance is obtained from the following equation:

    Absorbance per unit $(1/\mu m)$ = -Ln $(K_2)$|film thickness $(\mu m)$.

    with K2 being the transmittance of extraordinary light at a wavelength of 550 nm.

2.  The polarizing film (10) according to claim 1, wherein the dichroic materials (11) are iodine.

3.  The polarizing film (10) according to claim1 1 or claim 2, wherein the polyvinyl alcohol-based resin layer (12) consists of polyvinyl alcohol or an ethylene vinyl alcohol copolymer.

4.  A polarizing plate (20) comprising:

    (a) the polarizing film (10) according to claim 1 or claim 2; and
    (b) a transparent substrate (21) to support the polarizing film (10) from one side,

    wherein the transparent substrate (21) in an absorption axis direction (13) of the polarizing film (10) has a refractive index of less than 1.54.

5.  A polarizing plate (20) comprising:

    (a) the polarizing film (10) according to claim 3; and
    (b) a transparent substrate (21) to support the polarizing film (10) from one side,

    wherein the transparent substrate (21) in an absorption axis direction (13) of the polarizing film (10) has a refractive index of less than 1.54.

6. A liquid crystal display device (30) comprising a liquid crystal cell (31) and a back light (32), wherein the polarizing film (10) according to claim 1 or claim 2 is interposed between the liquid crystal cell (31) and the back light (32).

7. A liquid crystal display device (30) comprising a liquid crystal cell (31) and a back light (32), wherein the polarizing film (10) according to claim 3 is interposed between the liquid crystal cell (31) and the back light (32).

8. A liquid crystal display device (40) comprising a liquid crystal cell (41) and a back light (42), wherein the polarizing plate (20) according to claim 4 is interposed between the liquid crystal cell (41) and the back light (42).

9. A liquid crystal display device (40) comprising a liquid crystal cell (41) and a back light (42), wherein the polarizing plate (20) according to claim 5 is interposed between the liquid crystal cell (41) and the back light (42).

**Patentansprüche**

1. Polarisationsfilm (10) umfassend eine auf Polyvinylalkohol basierende Harzschicht (12) enthaltend dichroitische Materialien (11), **dadurch gekennzeichnet, dass** der Polarisationsfilm (10) aufweist:

   a) eine Filmdicke von 0,5 $\mu$m bis 5 $\mu$m, und
   b) eine Absorbanz von 1,5 bis 7,0 für außergewöhnliches Licht je Filmdicke von 1 $\mu$m relativ zu monochromatischem Licht mit einer Wellenlänge von 550 nm, wobei die Absorbanz gemäß der folgenden Gleichung erhalten wird:

$$\text{Absorbanz je Einheit } (1/\mu m) = -Ln\ (K_2)/\text{Filmdicke } (\mu m),$$

   wobei $K_2$ die Durchlässigkeit für außergewöhnliches Licht bei einer Wellenlänge von 550 nm ist.

2. Polarisationsfilm (10) nach Anspruch 1, wobei die dichroitischen Materialien (11) Jod sind.

3. Polarisationsfilm (10) nach Anspruch 1 oder 2, wobei die auf Polyvinylalkohol basierende Harzschicht (12) aus Polyvinylalkohol oder Ethylenvinylalkoholkopolymer besteht.

4. Polarisationsplatte (20) umfassend:

   a) den Polarisationsfilm (10) nach Anspruch 1 oder Anspruch 2; und
   b) ein transparentes Substrat (21) um den Polarisationsfilm (10) von einer Seite zu tragen,

   wobei das transparente Substrat (21) in einer Richtung der Absorptionsachse (13) des Polarisationsfilms (10) einen Brechungsindex von weniger als 1,54 aufweist.

5. Polarisationsplatte (20) umfassend:

   a) den Polarisationsfilm (10) nach Anspruch 3; und
   b) ein transparentes Substrat (21) um den Polarisationsfilm (10) von einer Seite zu tragen,

   wobei das transparente Substrat (21) in einer Richtung der Absorptionsachse (13) des Polarisationsfilms (10) einen Brechungsindex von weniger als 1,54 aufweist.

6. Flüssigkristalldisplayeinrichtung (30) umfassend eine Flüssigkristallzelle (31) und eine Hintergrundbeleuchtung (32), wobei der Polarisationsfilm (10) gemäß Anspruch 1 oder Anspruch 2 zwischen der Flüssigkristallzelle (31) und der Hintergrundbeleuchtung (32) angeordnet ist.

7. Flüssigkristalldisplayeinrichtung (30) umfassend eine Flüssigkristallzelle (31) und eine Hintergrundbeleuchtung (32), wobei der Polarisationsfilm (10) gemäß Anspruch 3 zwischen der Flüssigkristallzelle (31) und der Hintergrundbeleuchtung (32) angeordnet ist.

**8.** Flüssigkristalldisplayeinrichtung (40) umfassend eine Flüssigkristallzelle (41) und eine Hintergrundbeleuchtung (42), wobei die Polarisationsplatte (20) nach Anspruch 4 zwischen der Flüssigkristallzelle (41) und der Hintergrundbeleuchtung (42) angeordnet ist.

**9.** Flüssigkristalldisplayeinrichtung (40) umfassend eine Flüssigkristallzelle (41) und eine Hintergrundbeleuchtung (42), wobei die Polarisationsplatte (20) nach Anspruch 5 zwischen der Flüssigkristallzelle (41) und der Hintergrundbeleuchtung (42) angeordnet ist.


## Revendications

**1.** Film polarisant (10) comprenant une couche de résine à base d'alcool polyvinylique (12) incluant des matériaux dichroïques (11), **caractérisé en ce que** le film polarisant (10) présente :

(a) une épaisseur de film de 0,5 $\mu$m à 5 $\mu$m, et
(b) une absorbance de 1,5 à 7,0 pour une épaisseur de film de 1 $\mu$m sous lumière extraordinaire par rapport à une lumière monochromatique présentant une longueur d'onde de 550 nm,
dans lequel l'absorbance est obtenue à partir de l'équation qui suit :

```
absorbance par unité (1 / μm) = - Ln (K₂) / épaisseur
du film (μm)
```

$K_2$ représentant le facteur de transmission d'une lumière extraordinaire à une longueur d'onde de 550 nm.

**2.** Film polarisant (10) selon la revendication 1, dans lequel les matériaux dichroïques (11) sont de l'iode.

**3.** Film polarisant (10) selon la revendication 1 ou la revendication 2, dans lequel la couche de résine à base d'alcool polyvinylique (12) est constituée d'alcool polyvinylique ou d'un copolymère alcool vinyle éthylène.

**4.** Plaque polarisante (20) comprenant :

(a) le film polarisant (10) conforme à la revendication 1 ou à la revendication 2, et
(b) un substrat transparent (21) pour supporter le film polarisant (10) à partir d'un côté,

dans lequel le substrat transparent (21) dans la direction de l'axe d'absorption (13) du film polarisant (10) présente un indice de réfraction inférieur à 1,54.

**5.** Plaque polarisante (20) comprenant :

(a) le film polarisant (10) conforme à la revendication 3, et
(b) un substrat transparent (21) pour supporter le film polarisant (10) à partir d'un côté,

dans lequel le substrat transparent (21) dans la direction de l'axe d'absorption (13) du film polarisant (10) présente un indice de réfraction inférieur à 1,54.

**6.** Dispositif d'affichage à cristaux liquides (30) comprenant une cellule de cristaux liquides (31) et un éclairage par l'arrière (32), dans lequel le film polarisant (10) conforme à la revendication 1 ou à la revendication 2 est intercalé entre la cellule de cristaux liquides (31) et l'éclairage par l'arrière (32).

**7.** Dispositif d'affichage à cristaux liquides (30) comprenant une cellule de cristaux liquides (31) et un éclairage par l'arrière (32), dans lequel le film polarisant (10) conforme à la revendication 3 est intercalé entre la cellule de cristaux liquides (31) et l'éclairage par l'arrière (32).

**8.** Dispositif d'affichage à cristaux liquides (40) comprenant une cellule de cristaux liquides (41) et un éclairage par l'arrière (42), dans lequel la plaque polarisante (20) conforme à la revendication 4 est intercalée entre la cellule de cristaux liquides (41) et l'éclairage par l'arrière (42).

9. Dispositif d'affichage à cristaux liquides (40) comprenant une cellule de cristaux liquides (41) et un éclairage par l'arrière (42), dans lequel la plaque polarisante (20) conforme à la revendication 5 est intercalée entre la cellule de cristaux liquides (41) et l'éclairage par l'arrière (42).

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001343521 A